# EUROPEAN PATENT APPLICATION

(11) **EP 4 345 081 A1**
(43) Date of publication of application: **03.04.2024**
(21) Application number: 22841072.6
(22) Date of filing: 31.05.2022
(51) Int. Cl.: C04B 28/12, E02D 31/06, E02D 5/30

(54) **SOLIDIFIED SOIL, UNDERWATER STRUCTURE FOUNDATION PROTECTION STRUCTURE, AND CONSTRUCTION METHOD**

(30) Priority: 13.07.2021 CN 202110788914
(71) Applicant: Jiangsu Kunze Technology Co., Ltd, Nanjing 210012 (CN)
(72) Inventor: ZHONG, Tianxue, Nanjing 210012 (CN); WANG, Xiao, Nanjing 210012 (CN)
(74) Representative: Herrmann, Uwe
(86) International application number: PCT/CN2022/096251
(87) International publication number: WO 2023/284432

(57) **Abstract**

The present disclosure provides a solidified soil, a protective structure for a foundation of an underwater structure, and a construction method of the protective structure. The solidified soil is obtained by thoroughly mixing and stirring a high-moisture-content slurry and a curing agent. The protective structure for the foundation of the underwater structure is formed by conveying the solidified soil of the present disclosure to a surrounding zone of the foundation of the underwater structure and then curing the solidified soil. The protective structure is seamlessly attached to an outer wall of the foundation of the underwater structure. The solidified soil of the present disclosure is a protective material with strong fluidity and convenient construction. During construction, the solidified soil is flexible, and causes no damage to accessories and a foundation of an underwater structure. The protective structure formed by the solidified soil is simple and easy to construct with a low construction cost, and can have an anti-scouring function as a whole.

## Description

### TECHNICAL FIELD

The present disclosure relates to a solidified soil, a protective structure for a foundation of an underwater structure, and a construction method of the protective structure.

### BACKGROUND

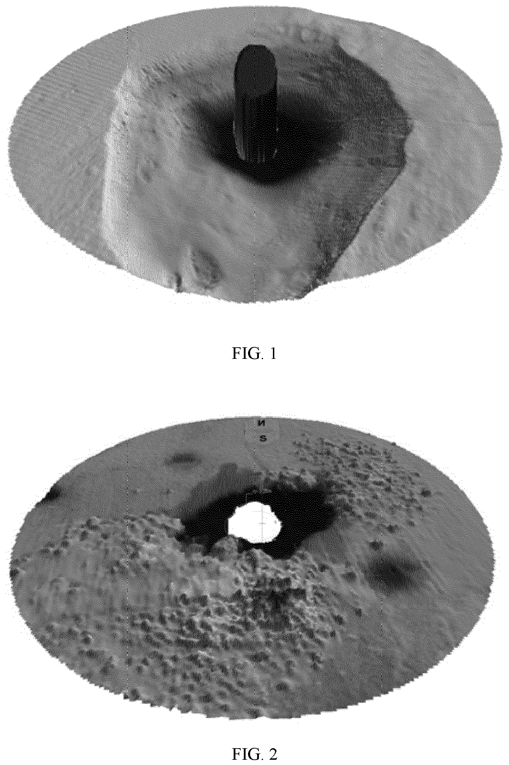

After an underwater structure (such as a wind power generation pile, a bridge pier, an embankment dam, and a lighthouse) is constructed and put into service in a region, the underwater structure changes the original hydrodynamic conditions in the region, and under a combined action of a plurality of dynamic forces such as wind, water waves, and currents, a scour pit will be formed around a foundation of the underwater structure due to a strong scouring action suffered by the foundation of the underwater structure, which in turn affects the stability of the foundation. FIG. 1 is a scanning map of a scour pit around a foundation of a wind power generation pile.

In order to overcome the above shortcoming, the existing measure is usually to throw rocks or sandbags around a foundation of an underwater structure for protection.

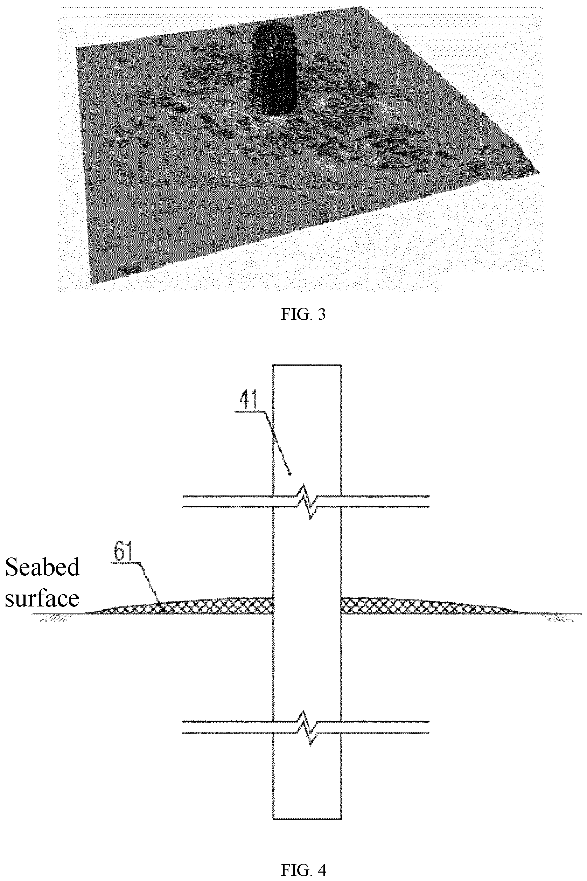

When rocks or sandbags are thrown around a foundation for protection, since an anti-corrosion layer on a wall of a pile needs to be protected, the rocks or sandbags are strictly prohibited to touch the wall during construction, and thus cannot be seamlessly attached to a periphery of the pile. In addition, because rocks and sandbags are bulk materials, it is difficult to achieve a close fit among the rocks or sandbags, and gaps among the rocks or sandbags will cause secondary scouring. FIG. 2 is a scanning map of a foundation of a wind power generation pile around which rocks are thrown for protection, and FIG. 3 is a scanning map of a foundation of a wind power generation pile around which sandbags are thrown for protection. It can be seen from FIG. 2 and FIG. 3 that, after the wind power generation pile is put into service for a period of time, the rocks or sandbags are gradually scoured off, and a scour pit around the foundation of the wind power generation pile will gradually deepen, resulting in a failed protective effect.

### SUMMARY

In order to solve the problems of the prior art, the present disclosure provides a solidified soil, a protective structure for a foundation of an underwater structure, and a construction method of the protective structure.

The present disclosure adopts the following technical solutions.

The present disclosure provides a solidified soil, where the solidified soil is obtained by thoroughly mixing and stirring 800 parts by weight to 1,200 parts by weight of a high-moisture-content slurry and 60 parts by weight to 200 parts by weight of a curing agent.

Further, the high-moisture-content slurry has a moisture content of 60% to 300%, and is obtained by adding water to a mud source to obtain a resulting mixture and thoroughly stirring the resulting mixture; and the curing agent is an inorganic composite curing agent.

Further, the mud source includes one or more selected from the group consisting of a clay, a silty clay, a clayey silt, a silty sand, a fine sand, and a medium sand, and an organic matter content in the mud source is lower than or equal to 40%.

Further, the inorganic composite curing agent is obtained by thoroughly mixing an inorganic main material and an auxiliary material in a mass ratio of (50%-90%):(10%-50%);
the inorganic main material is one or more selected from the group consisting of cement, lime, and gypsum; and
the auxiliary material is one or more inorganic materials selected from the group consisting of a fly ash, a volcanic ash, a steel slag powder, high-alumina bauxite, a mineral slag powder, a mica powder, a stone powder, a silica powder, a furnace slag powder, a talcum powder, bentonite, kaolin, diatomaceous earth, a carbonate, a silicate, a phosphate, and a sulfate.

Further, each of the inorganic main material and the auxiliary material for the inorganic composite curing agent has a particle size which allows a sieve residue on a 500 µm square-hole sieve to be less than 50%; and the auxiliary material has a moisture content of less than 30%.

The present disclosure also discloses a protective structure for a foundation of an underwater structure, where the protective structure is formed by curing the solidified soil of the present disclosure around the foundation of the underwater structure, and the protective structure is seamlessly attached to an outer wall of the foundation of the underwater structure.

Further, the protective structure further includes a filling layer, and the filling layer is arranged below the protective structure and is configured to fill a scour pit around the foundation of the underwater structure.

Further, the filling layer is obtained by thoroughly mixing and stirring 800 parts by weight to 1,200 parts by weight of the high-moisture-content slurry and 0 part by weight to 60 parts by weight of the curing agent. Other components in the filling layer are consistent with other components in the solidified soil of the present disclosure.

Further, the protective structure is conical in shape, and a slope ratio of the protective structure is 1:3 to 1:18.

The present disclosure also discloses a construction method of the protective structure for the foundation of the underwater structure described above, including the following steps:
1) determining a number of underwater conveying points for the solidified soil according to a direction of a water flow and a position of a submarine pipeline, and ensuring that a zone between two adjacent ones of the underwater conveying points is to be fully and seamlessly covered by the solidified soil;
2) locating a construction work boat to ensure that a distance between a hull of the construction work boat and an outer wall of the foundation of the underwater structure or a geometric center point of a scour pit is no less than 1 m;
3) when the foundation of the underwater structure is to be directly protected, allowing on-site preparation of the solidified soil on the construction work boat, and during the on-site preparation, a circulation flow is maintained to prevent premature hardening; within 8 h after the on-site preparation of the solidified soil is completed, conveying the solidified soil from the underwater conveying points to a surrounding zone of the foundation of the underwater structure through one or more selected from the group consisting of hydraulic fill by pumping, dumping fill by a grab, and dumping fill by a split hopper barge; and 8 h to 16 h after the conveying, curing the solidified soil underwater to finally form the protective structure seamlessly attached to the outer wall of the foundation of the underwater structure; and
4) when there is a scour pit with a depth of larger than 1.6 m around the foundation of the underwater structure, using a filling soil to form the filling layer, allowing on-site preparation of the filling soil on the construction work boat, and filling the filling soil in the scour pit to form the filling layer; and allowing on-site preparation of the solidified soil on the construction work boat, and after the on-site preparation of the solidified soil is completed, completing construction of the protective structure according to the process in the step 3).

Further, a maximum water flow rate of scouring tolerated by the solidified soil after being cured is no less than 1 m/s; and 28 d after the protective structure is formed, the protective structure has a cohesion value of greater than 20 kPa, an internal friction angle of greater than 10°, and an unconfined compressive strength (UCS) of 0.08 MPa to 3 MPa.

Further, after the filling soil is filled in the scour pit to form the filling layer, a thickness of the filling layer is no less than 1 m.

In the present disclosure, a novel solidified soil material is adopted and conveyed to a mud surface around a foundation of an underwater structure through backfilling, and then relying on the fluidity, scouring resistance, and self-compactability of the solidified soil, a whole plate-shaped solidified soil-based protective structure is formed around the foundation of the underwater structure to protect the foundation of the underwater structure to the maximum extent. Advantages of the present disclosure are as follows.
1) 28 d after the solidified soil of the present disclosure is cured underwater to form the protective structure, the solidified soil has a cohesion value of greater than 20 kPa, an internal friction angle of greater than 10°, and an UCS of 0.08 MPa to 3 MPa.
2) The construction method of the present disclosure is efficient and controllable, and solves the problems that a protective structure formed by the traditional method has disadvantages such as poor protection effect, short protection period, and high post-maintenance cost, and a material used in the traditional method has poor flexibility and is easy to cause damage to accessories and a foundation of an underwater structure during construction.
3) The solidified soil of the present disclosure is a protective material with strong fluidity and convenient construction. During construction, the solidified soil is flexible, and causes no damage to accessories and a foundation of an underwater structure. The protective structure formed by the solidified soil is simple and easy to construct with a low construction cost, and can have an anti-scouring function as a whole.

### BRIEF DESCRIPTION OF THE DRAWINGS

FIG. 1 is a scanning map of a scour pit around a foundation of a wind power generation pile.
FIG. 2 is a scanning map of a foundation of a wind power generation pile around which rocks are thrown for protection.
FIG. 3 is a scanning map of a foundation of a wind power generation pile around which sandbags are thrown for protection.
FIG. 4 is a schematic diagram of a protective structure formed by a solidified soil around a foundation of an underwater structure without an obvious scour pit.
FIG. 5 is a scanning map of a foundation of an underwater structure before the protective structure shown in FIG. 4 is constructed.
FIG. 6 is a scanning map of a foundation of an underwater structure 90 d after the protective structure shown in FIG. 4 is constructed.
FIG. 7 is a schematic diagram of a protective structure formed by a solidified soil around a foundation of an underwater structure with a scour pit.
FIG. 8 is a scanning map of a scour pit around a foundation of an underwater structure before the protective structure shown in FIG. 7 is constructed.
FIG. 9 is a scanning map of a foundation of an underwater structure 90 d after the protective structure shown in FIG. 7 is constructed.
FIG. 10 is a schematic diagram of a protective structure formed by a solidified soil around a foundation of an underwater structure with a relatively-large scour pit (a depth of the scour pit is larger than 1.6 m).
FIG. 11 is a scanning map of a scour pit around a foundation of an underwater structure before the protective structure shown in FIG. 10 is constructed.
FIG. 12 is a scanning map of a foundation of an underwater structure 90 d after the protective structure shown in FIG. 10 is constructed.

In the drawings: 41: foundation of an underwater structure, 60: scour pit, 61: solidified soil-based protective layer, and 62: filling layer.

### DETAILED DESCRIPTION OF THE EMBODIMENTS

The present disclosure is further described below with reference to the accompanying drawings.

### Example 1

A solidified soil was provided. The solidified soil was obtained by thoroughly mixing and stirring the following components in parts by weight: a high-moisture-content slurry: 800 parts, and a curing agent: 60 parts.

The high-moisture-content slurry was obtained by adding water to a mud source to obtain a resulting mixture, and then thoroughly stirring the resulting mixture, and the moisture content in the high-moisture-content slurry was 60%.

The mud source includes one or more selected from the group consisting of a clay, a silty clay, a clayey silt, a silty sand, a fine sand, and a medium sand (excluding a bulk material based on a crushed stone, a coarse sand, a stone, a gravel, or the like), and an organic matter content in the mud source was 40%.

The curing agent was obtained by thoroughly mixing an inorganic main material and an auxiliary material. The inorganic main material is one or more selected from the group consisting of cement, lime, and gypsum.

The auxiliary material is one or more inorganic materials selected from the group consisting of a fly ash, a volcanic ash, a steel slag powder, high-alumina bauxite, a mineral slag powder, a mica powder, a stone powder, a silica powder, a furnace slag powder, a talcum powder, bentonite, kaolin, diatomaceous earth, a carbonate, a silicate, a phosphate, and a sulfate. In addition, according to characteristics of the mud source and hydrological conditions of a field, a functional material such as a thickening agent, an early-strength agent, a retarding agent, or a plasticizing agent can be appropriately added to improve characteristics such as consistency, fluidity, and curing time of the slurry for the solidified soil.

Each of the inorganic main material and the auxiliary material has a particle size which allows a sieve residue on a 500 µm square-hole sieve to be less than 50%; and the auxiliary material has a moisture content of less than 30% (due to large fluidity of the high-moisture-content slurry, the curing agent was easily dispersed in and thoroughly mixed with the high-moisture-content slurry, and thus there was no need to strictly control the particle size and the moisture content of the curing agent as for a dry hard soil.)

During underwater construction of the solidified soil prepared with this formula, a protective structure will be formed after curing of the solidified soil around a foundation of an underwater structure, and the protective structure will be seamlessly attached to an outer wall of the foundation of the underwater structure.

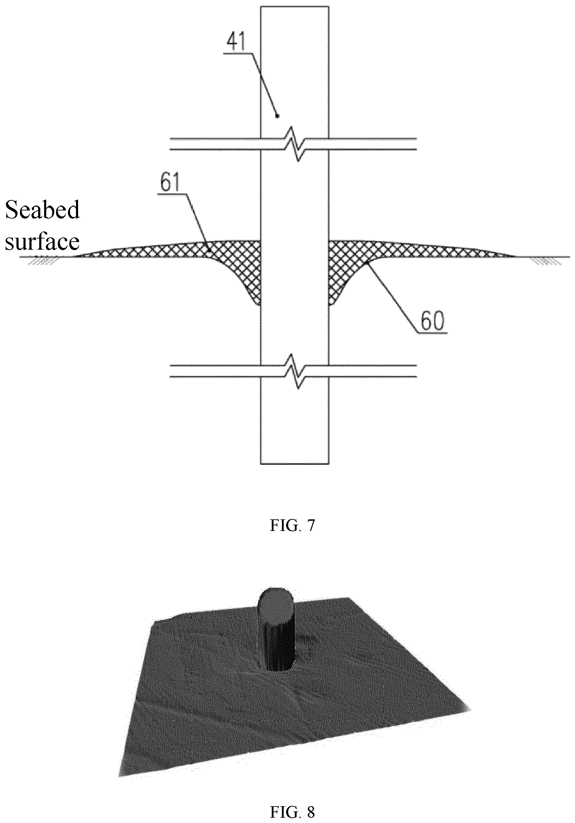

The protective structure is determined by a size of a scour pit. When there is no scour pit at a bottom of the foundation 41 of the underwater structure, that is, when the construction of the foundation 41 of the underwater structure is just completed, a natural seabed surface at the bottom of the foundation 41 of the underwater structure is nearly horizontal (as shown in FIG. 4). Or, when there is a relatively-small scour pit 60 at the bottom of the foundation 41 of the underwater structure (a distance between a lowermost bottom of the scour pit 60 and a seabed surface outside the scour pit is 1.6 m or less), as shown in FIG. 7, the protective structure is formed by allowing a solidified soil-based protective layer 61 to closely surround the foundation of the underwater structure.

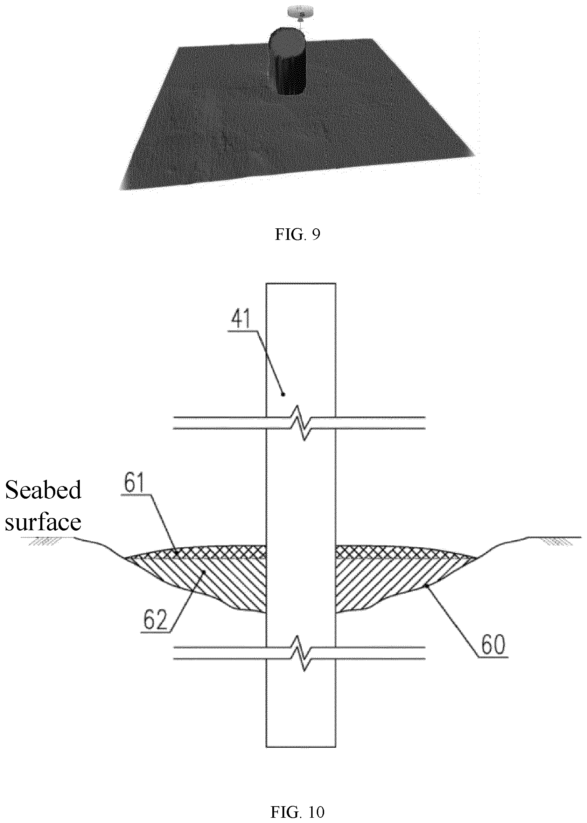

If there is a relatively-large scour pit, in order to save materials and costs, a filling layer 62 (as shown in FIG. 10) with a thickness of larger than 1 m is first arranged in the scour pit, and then a solidified soil-based protective layer 61 is added on the filling layer 62 to form a protective structure.

Regardless of a size of a scour pit, the solidified soil after being cured (namely, a solidified soil-based protective layer 61) is conical in shape, and a slope ratio of the solidified soil-based protective layer is 1:3 to 1:18.

Components in the filling layer 62 are the same as components in the solidified soil of the present disclosure, except that, in the filling layer 62, the amount of the curing agent is reduced to 0 part by weight to 60 parts by weight. The reduction of the amount of the curing agent can effectively save costs.

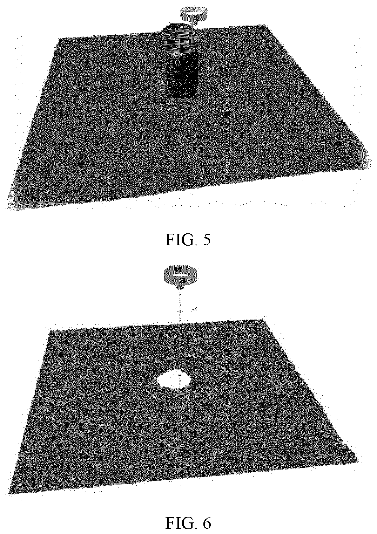

An underwater construction method with a solidified soil of this formula was as follows.
1) Underwater conveying point determination: A number of underwater conveying points for the solidified soil was determined, and it was ensured that a zone between two adjacent ones of the underwater conveying points was to be fully and seamlessly covered by the solidified soil.
2) Construction work boat location: A construction work boat was located to ensure that a distance between a hull of the construction work boat and an outer wall of a foundation 41 of an underwater structure or a geometric center point of a scour pit was no less than 1 m.
3) When the foundation of the underwater structure was to be directly protected without filling, on-site preparation of the solidified soil was allowed on the construction work boat, and during the on-site preparation, a circulation flow was maintained to prevent curing; within 8 h after the on-site preparation of the solidified soil was completed, the solidified soil was conveyed from the underwater conveying points to a surrounding zone of the foundation of the underwater structure through one or more selected from the group consisting of hydraulic fill by pumping, dumping fill by a grab, and dumping fill by a split hopper barge; and 13 h after the conveying, the solidified soil was cured underwater to finally form a protective structure seamlessly attached to the outer wall of the foundation of the underwater structure.
   When the filling is not required, the solidified soil can be directly filled into the surrounding zone of the foundation 41 of the underwater structure. FIG. 5 is a scanning map of the foundation of the underwater structure before the protective structure is constructed, and FIG. 6 is a scanning map of the foundation of the underwater structure 90 d after the protective structure is constructed. FIG. 8 is a scanning map of the scour pit around the foundation of the underwater structure before the protective structure is constructed, and FIG. 9 is a scanning map of the foundation of the underwater structure 90 d after the protective structure is constructed. It can be seen from the scanning result 90 d after the construction that the protective structure is expected to have a long-term anti-scouring protective effect and can provide long-term effective protection for the foundation of the underwater structure.
4) When there was a relatively-large scour pit around the foundation of the underwater structure and filling was required, on-site preparation of a filling soil was allowed on the construction work boat, and the filling soil was first filled in the scour pit to form a filling layer; and then on-site preparation of the solidified soil was allowed on the construction work boat, and after the on-site preparation of the solidified soil was completed, construction of a protective structure was completed according to the process in the step 3).

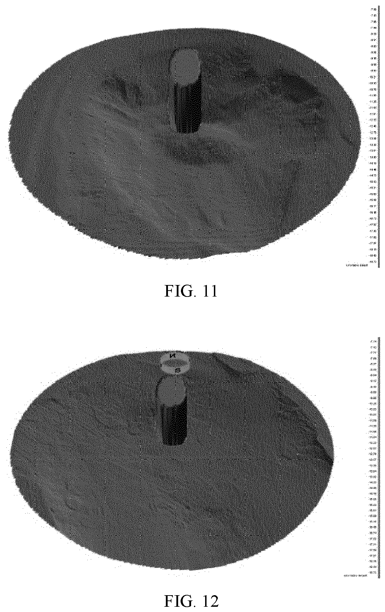

FIG. 11 is a scanning map of the scour pit around the foundation of the underwater structure before the protective structure shown in FIG. 10 is constructed, and FIG. 12 is a scanning map of the foundation of the underwater structure 90 d after the filling soil is filled and the protective structure shown in FIG. 10 is constructed. It can be seen from the scanning result 90 d after the construction that the protective structure is expected to have a long-term anti-scouring protective effect and can provide long-term effective protection for the foundation of the underwater structure.

A maximum water flow rate of scouring tolerated by the solidified soil prepared in this example after being cured is 3.3 m/s. 28 d after the protective structure is formed, the protective structure has a cohesion value of 29.5 kPa, an internal friction angle of 14.7°, and a UCS of 0.25 MPa.

### Example 2

In this example, a solidified soil was obtained by thoroughly mixing and stirring the following components in parts by weight: a high-moisture-content slurry: 1,000 parts, and a curing agent: 120 parts. A moisture content in the high-moisture-content slurry was 200%, and an organic matter content in a mud source was 15%.

11 h after underwater construction with a solidified soil of this formula, a protective structure seamlessly attached to an outer wall of a foundation of an underwater structure was formed.

A maximum water flow rate of scouring tolerated by the solidified soil prepared in this example after being cured is 4.5 m/s. 28 d after the protective structure is formed, the protective structure has a cohesion value of 41.6 kPa, an internal friction angle of 19.3°, and a UCS of 0.47 MPa.

### Example 3

In this example, a solidified soil was obtained by thoroughly mixing and stirring the following components in parts by weight: a high-moisture-content slurry: 1,200 parts, and a curing agent: 80 parts. A moisture content in the high-moisture-content slurry was 300%, and an organic matter content in a mud source was 5%.

15 h after underwater construction with a solidified soil of this formula, a protective structure seamlessly attached to an outer wall of a foundation of an underwater structure was formed.

A maximum water flow rate of scouring tolerated by the solidified soil prepared in this example after being cured is 1.4 m/s. 28 d after the protective structure is formed, the protective structure has a cohesion value of 24.1 kPa, an internal friction angle of 11.5°, and a UCS of 0.12 MPa.

### Example 4

In this example, a solidified soil was obtained by thoroughly mixing and stirring the following components in parts by weight: a high-moisture-content slurry: 1,200 parts, and a curing agent: 150 parts. A moisture content in the high-moisture-content slurry was 80%, and an organic matter content in a mud source was 4%.

10 h after underwater construction with a solidified soil of this formula, a protective structure seamlessly attached to an outer wall of a foundation of an underwater structure was formed.

A maximum water flow rate of scouring tolerated by the solidified soil prepared in this example after being cured is 5.2 m/s. 28 d after the protective structure is formed, the protective structure has a cohesion value of 58.8 kPa, an internal friction angle of 23.6°, and a UCS of 0.89 MPa.

### Example 5

In this example, a solidified soil was obtained by thoroughly mixing and stirring the following components in parts by weight: a high-moisture-content slurry: 800 parts, and a curing agent: 200 parts. A moisture content in the high-moisture-content slurry was 60%, and an organic matter content in a mud source was 2%.

8 h after underwater construction with a solidified soil of this formula, a protective structure seamlessly attached to an outer wall of a foundation of an underwater structure was formed.

A maximum water flow rate of scouring tolerated by the solidified soil prepared in this example after being cured is 9.1 m/s. 28 d after the protective structure is formed, the protective structure has a cohesion value of 105.3 kPa, an internal friction angle of 49.8°, and a UCS of 2.72 MPa.

### Example 6

In this example, a solidified soil was obtained by thoroughly mixing and stirring the following components in parts by weight: a high-moisture-content slurry: 1,200 parts, and a curing agent: 200 parts. A moisture content in the high-moisture-content slurry was 150%, and an organic matter content in a mud source was 2%.

9 h after underwater construction with a solidified soil of this formula, a protective structure seamlessly attached to an outer wall of a foundation of an underwater structure was formed.

A maximum water flow rate of scouring tolerated by the solidified soil prepared in this example after being cured is 6.5 m/s. 28 d after the protective structure is formed, the protective structure has a cohesion value of 74.4 kPa, an internal friction angle of 38.5°, and a UCS of 1.35 MPa.

The above are merely preferred implementations of the present disclosure. It should be noted that a person of ordinary skill in the art can make several improvements without departing from the principle of the present disclosure, but such improvements should also be deemed as falling within the protection scope of the present disclosure.

## Claims

1. A solidified soil and a protective structure for a foundation of an underwater structure comprising the solidified soil, wherein the solidified soil is obtained by thoroughly mixing and stirring 800 parts by weight to 1,200 parts by weight of a high-moisture-content slurry and 60 parts by weight to 200 parts by weight of a curing agent;
the curing agent is an inorganic composite curing agent, and the inorganic composite curing agent is obtained by thoroughly mixing an inorganic main material and an auxiliary material in a mass ratio of (50%-90%):(10%-50%);
the inorganic main material is one or more selected from the group consisting of cement, lime, and gypsum;
the auxiliary material is one or more inorganic materials selected from the group consisting of a fly ash, a volcanic ash, a steel slag powder, high-alumina bauxite, a mineral slag powder, a mica powder, a stone powder, a silica powder, a furnace slag powder, a talcum powder, bentonite, kaolin, diatomaceous earth, a carbonate, a silicate, a phosphate, and a sulfate;
the protective structure for the foundation of the underwater structure is formed by curing the solidified soil around the foundation of the underwater structure; the protective structure is seamlessly attached to an outer wall of the foundation of the underwater structure; and the protective structure for the foundation of the underwater structure further comprises a filling layer, and the filling layer is arranged below the protective structure and is configured to fill a scour pit around the foundation of the underwater structure.

2. The solidified soil and the protective structure for the foundation of the underwater structure comprising the solidified soil according to claim 1, wherein the high-moisture-content slurry has a moisture content of 60% to 300%, and is obtained by adding water to a mud source to obtain a resulting mixture and thoroughly stirring the resulting mixture.

3. The solidified soil and the protective structure for the foundation of the underwater structure comprising the solidified soil according to claim 2, wherein the mud source comprises one or more selected from the group consisting of a clay, a silty clay, a clayey silt, a silty sand, a fine sand, and a medium sand, and an organic matter content in the mud source is lower than or equal to 40%.

4. The solidified soil and the protective structure for the foundation of the underwater structure comprising the solidified soil according to claim 1, wherein each of the inorganic main material and the auxiliary material for the inorganic composite curing agent has a particle size which allows a sieve residue on a 500 µm square-hole sieve to be less than 50%; and the auxiliary material has a moisture content of less than 30%.

5. The solidified soil and the protective structure for the foundation of the underwater structure comprising the solidified soil according to claim 1, wherein the filling layer is obtained by thoroughly mixing and stirring 800 parts by weight to 1,200 parts by weight of the high-moisture-content slurry and 0 part by weight to 60 parts by weight of the curing agent.

6. The solidified soil and the protective structure for the foundation of the underwater structure comprising the solidified soil according to claim 1, wherein the protective structure is conical in shape, and a slope ratio of the protective structure is 1:3 to 1:18.

7. A construction method of the protective structure for the foundation of the underwater structure according to claim 1, comprising the following steps:
1) determining a number of underwater conveying points for the solidified soil according to a direction of a water flow and a position of a submarine pipeline, and ensuring that a zone between two adjacent ones of the underwater conveying points is to be fully and seamlessly covered by the solidified soil;
2) locating a construction work boat to ensure that a distance between a hull of the construction work boat and an outer wall of the foundation of the underwater structure or a geometric center point of a scour pit is no less than 1 m;
3) when the foundation of the underwater structure is to be directly protected, allowing on-site preparation of the solidified soil on the construction work boat, and during the on-site preparation, a circulation flow is maintained to prevent premature hardening; within 8 h after the on-site preparation of the solidified soil is completed, conveying the solidified soil from the underwater conveying points to a surrounding zone of the foundation of the underwater structure through one or more selected from the group consisting of hydraulic fill by pumping, dumping fill by a grab, and dumping fill by a split hopper barge; and 8 h to 16 h after the conveying, curing the solidified soil underwater to finally form the protective structure seamlessly attached to the outer wall of the foundation of the underwater structure; and
4) when there is a scour pit with a depth of larger than 1.6 m around the foundation of the underwater structure, using a filling soil to form the filling layer, allowing on-site preparation of the filling soil on the construction work boat, and filling the filling soil in the scour pit to form the filling layer; and allowing on-site preparation of the solidified soil on the construction work boat, and after the on-site preparation of the solidified soil is completed, completing construction of the protective structure according to the process in the step 3).

8. The construction method of the protective structure for the foundation of the underwater structure according to claim 7, wherein a maximum water flow rate of scouring tolerated by the solidified soil after being cured is no less than 1 m/s; and 28 d after the protective structure is formed, the protective structure has a cohesion value of greater than 20 kPa, an internal friction angle of greater than 10°, and an unconfined compressive strength of 0.08 MPa to 3 MPa.

9. The construction method of the protective structure for the foundation of the underwater structure according to claim 7, wherein after the filling soil is filled in the scour pit to form the filling layer, a thickness of the filling layer is no less than 1 m.
